# FASCICULE DE BREVET EUROPEEN

(11) **EP 0 882 272 B1**
(45) Date de publication et mention de la délivrance du brevet: **03.05.2000**
(21) Numéro de dépôt: 96942411.8
(22) Date de dépôt: 13.12.1996
(51) Int. Cl.: G06K 7/08

(54) **DISPOSITIF DE LECTURE DE CARACTERES MAGNETISABLES**
LESEGERÄT FÜR MAGNETISSCHE ZEICHEN
MAGNETIC INK CHARACTER READER DEVICE

(30) Priorité: 22.12.1995 FR 9515429
(43) Date de publication de la demande: 09.12.1998
(73) Titulaire: Tenenbaum, Jean, 19600 La Feuillade (FR)
(72) Inventeur: Tenenbaum, Jean, 19600 La Feuillade (FR)
(86) Numéro de dépôt international: FR9602007
(87) Numéro de publication internationale: WO9723841

(56) Documents cités:
- EP-A- 0 535 936
- WO-A-95/14978
- FR-A- 2 389 180

## Description

La présente invention concerne un dispositif de lecture de caractères magnétisables portés sur un support. Les caractères défilent devant une tête de lecture à haute sensibilité comprenant au moins un élément magnétorésistif. Ils produisent des variations de résistance de l'élément magnétorésistif, qui sont amplifiées et mesurées puis acquises par une unité de traitement. Ils sont décodés par l'unité de traitement électronique, et peuvent être exploités par un utilisateur ou par une machine.

Le document EP-A-0.535.936 décrit un appareil de lecture de caractères MICR (codes magnétiques ou magnétisables - Magnetic Ink Characters Reading). Il est composé de deux magnétorésistances parallèles dont la distance dépend de la largeur des éléments des caractères à lire. Ces deux magnétorésistances sont reliées à un circuit électronique de lecture.

Le document EP-A-0.419.040 décrit un capteur de position/vitesse d'une pièce mécanique basé sur un effet magnétorésistif et destiné à l'industrie automobile. Dans un mode de réalisation particulier, une plaque à haute perméabilité est disposée sur la surface de l'élément magnétorésistif pour améliorer l'homogénéité du champ magnétique transmis par l'aimant. Ce dernier est relié à un pont de résistances pour la lecture des signaux.

FR-A-2 389 180 décrit un dispositif de transduction magnétique de détection d'informations magnétiques codées comprenant les caractéristiques dans le préambule de la revendication 1.

Ces moyens de détection connus n'ont pas une sensibilité élevée. Par ailleurs, ces systèmes sont coûteux et compliqués.

Le but de l'invention est la réalisation d'un dispositif de lecture qui a une bonne sensibilité et permet la lecture de caractères dans des conditions réelles variées.

Pour cela, la valeur du champ magnétique dans l'espace de la lecture est maintenue élevée, constante et homogène sans toutefois aller à la saturation. Cette valeur élevée de champ magnétique augmentant considérablement la sensibilité de la tête, génère un rapport signal/bruit excellent aux entrées de l'amplificateur opérationnel, ne demande qu'un gain faible à l'amplificateur opérationnel, et permet de faire traverser l'élément magnétorésistif par un courant faible, pour une lecture dans de bonnes conditions.

La diminution du courant traversant l'élément magnétorésistif produit un champ magnétique global un peu plus faible, mais est sans influence sur le coût et le bon fonctionnement de la tête de lecture associée à l'unité de traitement électronique. Par ailleurs, la technique utilisée est simple.

Ainsi, l'invention concerne un dispositif de lecture de caractères magnétisables portés sur un support comprenant:
- une tête de lecture comprenant des moyens d'aimantation et au moins un élément magnétorésistif, ledit élément magnétorésistif ayant une résistance variable, fonction du flux magnétique auquel il est soumis, chaque caractère passant lors d'un déplacement relatif du support par rapport à la tête de lecture, d'abord devant les moyens d'aimantation, puis devant l'élément magnétorésistif,
- une unité de traitement électronique recevant des signaux provenant de l'élément magnétorésistif lors du déplacement relatif et produisant des signaux représentatifs des caractères et exploitables à toutes fins utiles caractérisé en ce que
la tête de lecture comprend une plaque en matériau ferromagnétique placée près des moyens d'aimantation et s'étendant au voisinage de l'élément magnétorésistif, ladite plaque appliquant un champ magnétique permanent et homogène sur l'élément magnétorésistif.

La plaque en matériau ferromagnétique peut être ou non en contact avec les moyens d'aimantation.

L'invention présente avantageusement les caractéristiques ci-après considérées isolément ou selon toutes leurs combinaisons techniquement possibles:
- L'unité de traitement électronique comprend:
   . des bornes d'alimentation reliées à une source de tension continue;
   . une résistance fixe connectée en série avec la résistance variable de l'élément magnétorésistif entre les bornes d'alimentation, le tout relié à la tension d'alimentation continue,
   . un amplificateur opérationnel relié aux bornes et délivrant au moyen d'exploitation, des signaux fonction de la variation ohmique de la résistance de l'élément magnétorésistif.
- L'unité de traitement comporte une association de résistances et condensateurs branchés entre les pôles d'entrée de l'amplificateur opérationnel, de telle sorte que les variations rapides de valeur ohmique de l'élément magnétorésistif soient acquises et amplifiées par l'amplificateur opérationnel, via les condensateurs, alors que les variations lentes de valeur ohmique de l'élément magnétorésistif ne produisent aucune variation de tension à la sortie dudit amplificateur opérationnel.

La principale cause de variations lentes indésirables est due à la dérive importante de la valeur ohmique de l'élément magnétorésistif en fonction de la température. Ses effets sont ainsi neutralisés.
- La plaque ferromagnétique a des dimensions telles que sa surface soit plus grande que la surface active de l'élément magnétorésistif, lui fournissant ainsi un flux magnétique homogène et sans effets de "bords".
- L'élément magnétorésistif a une longueur de 10 mm environ.
- L'élément magnétorésistif a une largeur de 0,15 mm environ.
- Le dispositif comprend au moins deux éléments magnétorésistifs.
- Les composants de la tête de lecture sont avantageusement noyés dans un bloc de résine.

Lors de l'utilisation des systèmes connus, ayant des têtes de lecture magnétique à bobinage, la pression tête/support des éléments MICR doit être relativement importante (50 g/cm²). Le support des éléments MICR étant souvent du papier, substance très abrasive, la durée de vie de la tête est faible.

Le dispositif de l'invention offrant une sensibilité de tête magnétique importante, il n'est plus nécessaire d'avoir de pression tête/support. La durée de vie et la fiabilité en sont augmentées d'autant.

Le coût du dispositif de l'invention est réduit et il peut être utilisé aisément afin de vérifier ou de lire des documents, des moyens de paiement ou autre..., portant des caractères magnétisables.

Les moyens de la présente invention comportent une tête de lecture, réagissant au déplacement relatif du support par rapport à la tête de lecture et une unité de traitement électronique. La tête de lecture comprend au moins un aimant permanent ou non, un élément magnétorésistif relié sous tension à une unité de traitement électronique du signal et un moyen d'exploitation pour un utilisateur et une plaque en matériau ferromagnétique placée près de l'aimant permanent et située au voisinage de l'élément magnétorésistif. Des moyens de déplacement relatif et de guidage du support peuvent se présenter sous la forme d'une plaque.

Le déplacement relatif peut aussi être assuré sans guidage ni motorisation dans un mode de lecture dit "à la volée". Dans ce cas, il est recommandé d'augmenter la longueur de l'élément magnétorésistif afin de toujours avoir les caractères MIRC en dessous de l'élément magnétorésistif, donc d'obtenir une lecture correcte.

Dans les têtes à éléments magnétorésistifs, il est possible de prévoir aisément un élément magnétorésistif de grande longueur, sans augmentation conséquente de prix. Les têtes magnétiques à bobinage n'offrent pas de possibilités comparables.

La lecture "à la volée" peut se faire aussi sans augmentation de coût dans un rapport de vitesse différentiel entre la tête et les éléments MICR de 3 à 10, en fonction de l'adaptation aisée à réaliser dans l'unité de traitement.

La sensibilité de l'élément magnétorésistif est fonction du courant qui le traverse et de l'intensité du champ magnétique auquel il est soumis. En pratique, la tension d'alimentation est faible (5 ou 12 volts) et la valeur ohmique de l'élément magnétorésistif est assez grande (quelques centaines ohms).

La sensibilité du dispositif de l'invention est augmentée par l'utilisation de la plaque ferromagnétique placée près de l'aimant permanent d'une part et situé au voisinage de l'élément magnétorésistif d'autre part. Une telle plaque, recouvrant largement la surface de l'élément magnétorésistif, transmet un champ magnétique pratiquement constant et homogène; augmentant ainsi la sensibilité dans un rapport de 10 à 50 suivant les cas. Cette plaque ferromagnétique a également pour rôle d'éliminer les effets de bord.

Les caractères du support sont magnétisés lorsque celui-ci se présente devant l'aimant permanent.

Lors de la lecture, l'élément magnétorésistif reçoit un champ magnétique global, somme de trois champs magnétiques:
- B1: champ magnétique de la plaque,
- B2: champ magnétique des caractères magnétisés du support,
- B3: champ magnétique de l'élément magnétorésistif lui-même, généré par le courant qui le traverse.

Les champs magnétiques B1 et B2 sont de même sens. La direction du champ B3 n'est pas importante et n'implique aucun réglage. Néanmoins, lorsque le champ magnétique B3 est de sens opposés à la somme des champs B1 + B2, la somme B=B1+B2+B3 ne doit pas saturer l'élément magnétorésistif. Il n'est donc pas nécessaire d'effectuer un contrôle du sens de montage de l'élément magnétorésistif dans la tête de lecture.

D'après les normes actuellement en vigueur, les caractères du support représentant une lettre ou un chiffre sont constitués de sept barres et de six espaces. La largeur des barres est égale à 0,1 mm environ. Parmi les six espaces, X par exemple, peut être de largeur = 0,4 mm environ et les autres soit 6 - X peuvent être étroits = 0,2 mm environ. Dans un défilement où une présentation du support devant la tête de lecture, seuls les espaces entre les barres sont significatifs. Le déplacement du support crée ainsi une variation de résistance de l'élément magnétorésistif. Cette variation ohmique induit un signal dans le circuit de traitement électronique qui est amplifié pour être exploité à toutes fins utiles par un utilisateur.

Des dispositions, formes et caractéristiques de la présente invention ressortiront de la description détaillée faite en regard des dessins annexés sur lesquels:

La Figure 1 représente schématiquement le dispositif complet.

La Figure 2 représente schématiquement l'unité électronique.

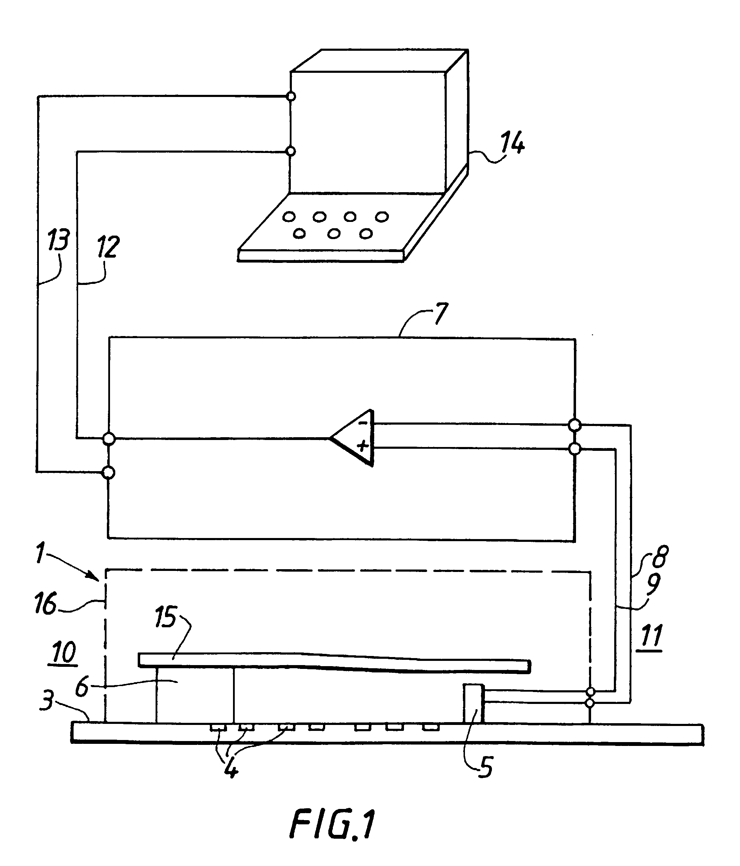

La Figure 1 illustre un premier mode de réalisation représentant la tête de lecture 1 noyée dans un bloc de résine 16. A la partie inférieure de la tête de lecture 1 se trouve à gauche l'aimant permanent 6 et à droite l'élément magnétorésistif 5. Cet élément a une longueur (dans le sens du défilement des caractères) de 10 mm environ et une largeur de 0,15 mm. Une plaque 15 est placée près de l'aimant permanent 6 et s'étend au voisinage de l'élément magnétorésistif 5. Une unité 7 de traitement électronique généralement extérieure à la tête de lecture, est connectée à l'élément magnétorésistif 5 par l'intermédiaire des fils 8 et 9. Un moyen d'exploitation 14 également situé en dehors de la tête de lecture 1. Ce moyen d'exploitation 14 est connecté à l'unité 7 de traitement électronique par l'intermédiaire des fils 12 et 13. Ce support 3 porte les caractères 4 magnétisables. Son déplacement dans ce mode de réalisation est effectué de la gauche 10 vers la droite 11.

Le support 3 éventuellement guidé par rapport à la tête de lecture 1 passe d'abord devant l'aimant permanent 6 pour magnétiser les caractères 4. Ces caractères 4 magnétisés vont ensuite faire changer la résistance de l'élément magnétorésistif 5 en passant devant lui. Les variations de cette résistance de l'élément magnétorésistif 5 sont détectés par l'unité électronique 7 pour être utilisé par les moyens d'exploitation 14 qui peuvent être une visualisation, un enregistrement, ou tout autre.

La plaque 15 selon l'invention est en métal ferromagnétique; elle possède ainsi une grande perméabilité magnétique. Elle transmet un champ magnétique pratiquement constant et homogène à l'élément magnétorésistif 5. Dans ce mode de réalisation, le champ magnétique obtenu est donc la superposition de trois champs magnétiques produits respectivement, donné par la plaque 15, les caractères 4 magnétisés et l'élément magnétorésistif 5 lui-même. Les champs produits par la plaque 15 et les caractères 4 sont de même sens.

Le bloc de résine 16 permet de stabiliser la tête de lecture 1 afin d'éviter toute perturbation et d'accroître sa fiabilité et sa robustesse mécanique aux chocs et vibrations.

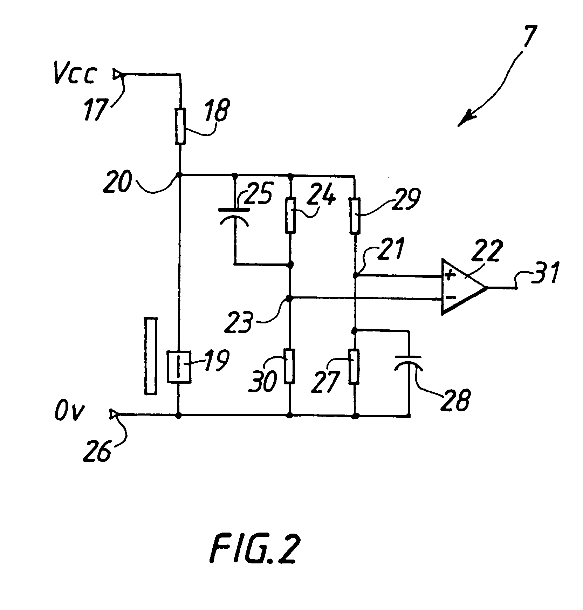

La Figure 2 illustre l'unité de traitement électronique 7 alimentée par une source de tension continue à ses bornes 17, 26. Entre les deux pôles 17, 26 de la source sont montées en série une résistance 18 et une résistance 19 de l'élément magnétorésistif 5. Entre ces deux résistances 18, 19, se trouve un point de jonction 20 qui est relié à l'entrée positive 21 de l'amplificateur opérationnel 22 par l'intermédiaire d'une résistance 29. Du point de jonction 20, à l'entrée négative 23 de l'amplificateur opérationnel 22 sont montés en parallèle une résistance 24 et un condensateur 25. Du pôle négatif 26 à l'entrée positive 21 de l'amplificateur opérationnel 22, sont reliés, montés en parallèle, une résistance 27 et un condensateur 28. Une autre résistance 30 relie l'entrée négative 23 de l'amplificateur opérationnel 22 au pôle négatif 26 de la tension d'alimentation. La sortie 31 de l'amplificateur opérationnel 22 est connectée au moyen d'exploitation 14.

L'amplificateur opérationnel 22 permet d'amplifier des signaux recueillis aux bornes de la résistance 19 de l'élément magnétorésistif 5 pour les transmettre au moyen d'exploitation 14. Les signaux recueillis au point 20 sont générés par les variations de valeur ohmique de la résistance 19; la résistance 18 étant de valeur fixe et la tension d'alimentation continue (17, 26) étant considérée fixe et stable.

Si ces variations de valeur ohmique sont rapides (déplacement rapide relatif de la tête de lecture des caractères (MICR), l'impédance des condensateurs 25 et 28 est faible; dans ce cas, l'amplificateur opérationnel 22 reflète à sa sortie 31, les variations du point 20, dûment amplifiées.

Si les variations de valeur ohmique sont lentes, (spécifiquement la variation de la résistance 19 en fonction de la température) l'impédance des condensateurs 25 et 29 est grande si la résistance 24 égale la résistance 29 et la résistance 30 égale la résistance 27 ou si les quatre résistances sont d'égale valeur, aucun signal n'est transmis à la sortie 31 de l'amplificateur opérationnel 22.

Dans certaines applications particulières, le dispositif de lecture associe avantageusement plusieurs éléments magnétorésistifs.

## Revendications

1. Dispositif de lecture de caractères (4) magnétisables portés sur un support (3) comprenant:
- une tête de lecture (1) comprenant des moyens d'aimantation (6) et au moins un élément magnétorésistif (5), ledit élément magnétorésistif (5) ayant une résistance (19) variable, fonction du flux magnétique auquel il est soumis, chaque caractère (4) passant lors d'un déplacement relatif du support 3 par rapport à la tête de lecture (1), d'abord devant les moyens d'aimantation (6), puis devant l'élément magnétorésistif (5),
- une unité de traitement électronique (7) recevant des signaux provenant de l'élément magnétorésistif (5) lors du déplacement relatif et produisant des signaux représentatifs des caractères (4) et exploitables à toutes fins utiles
caractérisé en ce que la tête de lecture (1) comprend une plaque (15) en matériau ferromagnétique placée près des moyens d'aimantation (6) et s'étendant au voisinage de l'élément magnétorésistif (5), ladite plaque (15) appliquant un champ magnétique permanent et homogène sur l'élément magnétorésistif (5).

2. Dispositif de lecture de caractères (4) magnétisables selon la revendication 1, caractérisé en ce que l'unité de traitement électronique (7) comprend:
- des bornes d'alimentation (17,26) reliées à une source de tension continue,
- une résistance (18) fixe connectée en série avec la résistance variable de l'élément magnétorésistif (5) entre les bornes d'alimentation (17, 26), le tout relié à la tension d'alimentation continue,
- un amplificateur opérationnel (22) relié aux bornes (20, 26) et délivrant au moyen d'exploitation (14), des signaux fonction de la valeur de la variation ohmique de la résistance (19) de l'élément magnétorésistif (5).

3. Dispositif de lecture de caractères (4) magnétisables selon la revendication 2, caractérisé en ce que l'unité de traitement (7) comporte des résistances (24, 27, 29, 30) et condensateurs (25, 28) branchés entre les pôles d'entrée (21, 23) de l'amplificateur opérationnel (22), de telle sorte que les variations rapides de la valeur ohmique de l'élément magnétorésistif (5) soient acquises et amplifiées par l'amplificateur opérationnel (22), via les condensateurs (25, 28) , alors que les variations lentes de la valeur ohmique de l'élément magnétorésistif (5) ne produisent aucune variation de tension à la sortie (31) dudit amplificateur opérationnel (22).

4. Dispositif de lecture de caractères (4) magnétisables selon l'une quelconque des revendications 1 à 3, caractérisé en ce que la plaque (15) ferromagnétique a des dimensions telles que sa surface soit plus grande que la surface active de l'élément magnétorésistif (5).

5. Dispositif de lecture de caractères (4) magnétisables selon l'une quelconque des revendications 1 à 4, caractérisé en ce que l'élément magnétorésistif (5) a une longueur de 10 mm environ.

6. Dispositif de lecture de caractères (4) magnétisables selon l'une quelconque des revendications 1 à 5, caractérisé en ce que l'élément magnétorésistif (5) a une largeur de 0,15 mm environ.

7. Dispositif de lecture de caractères (4) magnétisables selon l'une des revendications 1 à 6 caractérisé en ce qu'il comprend au moins deux éléments magnétorésistifs (5).

8. Dispositif de lecture de caractères (4) magnétisables selon l'une quelconque des revendications 1 à 7, caractérisé en ce que les composants de la tête de lecture (1) sont noyés dans un bloc de résine (16).

## Patentansprüche

1. Vorrichtung zum Lesen magnetischbaren Zeichen (4) auf einem Träger (3):
- mit einem Lesekopf (1), der Magnetisierungsmittel (6) und mindestens ein magnetostriktives Element (5) aufweist, wobei besagtes mindestens ein magnetostriktives Element (5) einen variablen Widerstand (19) hat, der vom an ihm angebrachten magnetischen Fluß abhängig ist, und wobei jedes Zeichen (4) während der relativen Bewegung des Trägers (3) zum Lesekopf (1) zunächst am Magnetisierungsmittel (6) und dann an besagtem mindestens einem magnetostriktiven Element (5) vorübergeht,
- mit einer elektronischen Verarbeitungseinheit (7), der vom mindestens einem magnetostriktiven Element (5) erzeugten Signale während der relativen Bewegung bekommt und repräsentative von Zeichen und für alle Fälle verwandte Signale erzeugt,
dadurch gekennzeichnet, daß der Lesekopf (1) eine neben den Magnetisierungsmittel (6) angeordnete und sich bis die Nähe des mindestens eines magnetostriktiven Elementes (5) erstreckende Platte (15) aus ferromagnetischem Werkstoff aufweist, wobei bezagte Platte (15) am mindestens einem magnetostriktiven Element (5) einen dauernden und gleichförmigen magnetischen Fluß anbringt.

2. Vorrichtung zum Lesen magnetischbaren Zeichen (4) nach Anspruch 1, dadurch gekennzeichnet, daß die elektronische Verarbeitungseinheit (7)
- Anschlußklemme (17, 26), die an einer Gleichspannungsquelle in Reihe angeschlossen sind,
- einen Festwiderstand (18), der am variablen Widerstand des mindestens eines magnetostriktiven Elementes (5) zwischen den Anschlußklemmen (17, 26) in Reihe angeschlossen ist, wobei der ganze Kreis an der Gleichspannungsquelle angeschlossen ist,
- einen Operationsverstärker (22), der an den Schaltungspunkten (20, 26) ansgeschlossen ist und auf den Betriebssystem Signale überträgt, die von der ohmschen Veränderungswert des Widerstandes (19) des mindestens eines magnetostriktiven Elementes (5) abhängig sind, aufweist.

3. Vorrichtung zum Lesen magnetischbaren Zeichen (4) nach Anspruch 2, dadurch gekennzeichnet, daß die elektronische Verarbeitungseinheit (7) Widerstände (24, 27,29, 30) und Kondensatoren (25, 28) aufweist, die zwischen den Einfürhungsklemmen (21, 23) des Operationsverstärkers (22) angeschlossen sind, sodaß die schnelle Ohmwertveränderungen des mindestens eines magnetostriktiven Elementes (5) vom Operationsverstärker (22) durch den Konsendatoren (25, 28) bekommt und verstärkt sind, während die langsame Ohmwertveränderungen des mindestens eines magnetostriktiven Elementes (5) am Ausgang von bezagtem Operationsverstärker (22) keine Spannungsveränderung erzeugt.

4. Vorrichtung zum Lesen magnetischbaren Zeichen (4) nach einem der Ansprüche 1 bis 3, dadurch gekennzeichnet, daß die ferromagnetische Platte (15) so bemessen ist, daß die Flächeinhalt größer als die aktive Flächeinhalt des mindestens eines magnetostriktiven Elementes (5) ist.

5. Vorrichtung zum Lesen magnetischbaren Zeichen (4) nach einem der Ansprüche 1 bis 4 dadurch gekennzeichnet, daß das mindestens ein magnetostriktives Element (5) ca. 10 mm lang ist.

6. Vorrichtung zum Lesen magnetischbaren Zeichen (4) nach einem der Ansprüche 1 bis 5, dadurch gekennzeichnet, daß das mindestens ein magnetostriktives Element (5) ca. 0,15 mm breit ist.

7. Vorrichtung zum Lesen magnetischbaren Zeichen (4) nach einem der Ansprüche 1 bis 6, dadurch gekennzeichnet, daß sie mindestens zwei magnetostriktive Elemente (5) aufweist.

8. Vorrichtung zum Lesen magnetischbaren Zeichen (4) nach einem der Ansprüche 1 bis 7, dadurch gekennzeichnet, daß die Bauteile des Lesekopfes (1) in einem Harzblock (16) eingebettet sind.

## Claims

1. Device for reading magnetizable characters (4) provided on a support (3) comprising :
- a read head (1) comprising magnetization means (6) and at least one magneto-resistive element (5), said at least one magneto-resitive element (5) behaving as a variable resistor (19) the resistance of which depends on the magnetic flux it is submitted to, wherein when the support (3) is moving relatively to the read head (1) each character (4) goes past first the magnetization means (6) and then said at least one magneto-resistive element (5),
- an electronic processing unit (7) receiving signals from the at least one magneto-resistive element (5) during the relative shift and producing signals indicative of the characters (4) and usable for all purposes,
characterised in that the read head (1) comprises a plate (15) made of a ferromagnetic material provided near the magnetization means (6) and extending near the at least one magneto-resistive element (5), said plate (15) providing a permanent homogeneous magnetic field to the at least one magneto-resistive element (5).

2. Device for reading magnetizable characters (4) according to claim 1, characterised in that the electronic processing unit (7) comprises :
- power supply terminals (17, 26) connected to a dc power supply,
- a fixed resistor (18) connected in series with the variable resistor formed by the at least one magneto-resistive element (5) between the power supply terminals (17, 26), the whole circuit being connected to the dc power supply,
- an operational amplifier (22) connected to the nodal points (20, 26) and providing to the operating means (14) signals depending on the value of the resistance variation of the resistor (19) formed by the at least one magneto-resistive element (5).

3. Device for reading magnetizable characters (4) according to claim 2, characterised in that the processing unit (7) comprises resistors (24, 27, 29, 30) and capacitors (25, 28) connected between the input leads (21, 23) of the operational amplifier (22), so that the fast variations of the resistance of the at least one magneto-resistive element (5) are received and amplified by the operational amplifier (22), via the capacitors (25, 28), while the slow variations of the resistance of the at least one magneto-resistive element (5) provide no voltage variation at the output (31) of said operational amplifier (22).

4. Device for reading magnetizable characters (4) according to any one of claims 1 to 3, characterised in that the ferromagnetic plate (15) is so sized that its surface area is bigger than the active surface area of the at least one magneto-resistive element (5).

5. Device for reading magnetizable characters (4) according to any one of claims 1 to 4, characterised in that the at least one magneto-resistive element (5) is about 10 mm in length.

6. Device for reading magnetizable characters (4) according to any one of claims 1 to 5, characterised in that the at least one magneto-resistive element (5) is about 0,15 mm in width.

7. Device for reading magnetizable characters (4) according to any one of claims 1 to 6, characterised in that it comprises at least two magneto-resistive elements (5).

8. Device for reading magnetizable characters (4) according to any one of claims 1 to 7, characterised in that the components of the read head (1) are embedded in a resin bloc (16).
